# EUROPÄISCHE PATENTSCHRIFT

(11) **EP 3 114 005 B1**
(45) Veröffentlichungstag und Bekanntmachung des Hinweises auf die Patenterteilung: **18.04.2018**
(21) Anmeldenummer: 15706248.0
(22) Anmeldetag: 25.02.2015
(51) Int. Cl.: B62D 1/187, F16H 25/20, B62D 1/181

(54) **LENKSÄULE FÜR EIN KRAFTFAHRZEUG**
STEERING COLUMN FOR A MOTOR VEHICLE
COLONNE DE DIRECTION DESTINÉE À UN VÉHICULE AUTOMOBILE

(30) Priorität: 07.03.2014 DE 102014103028
(43) Veröffentlichungstag der Anmeldung: 11.01.2017
(73) Patentinhaber: ThyssenKrupp Presta AG, 9492 Eschen (LI); thyssenkrupp AG, 45143 Essen (DE)
(72) Erfinder: GALEHR, Robert, 9486 Schaanwald (LI)
(74) Vertreter: thyssenkrupp Intellectual Property GmbH
(86) Internationale Anmeldenummer: PCT/EP2015/053954
(87) Internationale Veröffentlichungsnummer: WO 2015/132105

(56) Entgegenhaltungen:
- EP-A1- 1 980 470
- DE-A1- 4 344 681

## Beschreibung

### Technisches Gebiet

Die vorliegende Erfindung betrifft eine Lenksäule für ein Kraftfahrzeug, welche eine mit dem Chassis des Kraftfahrzeugs verbindbare Trageinheit und eine an dieser Trageinheit gehaltene und gegenüber der Trageinheit mittels eines Verstellantriebs verstellbare Verstelleinheit aufweist.

### Stand der Technik

Lenksäulen für Kraftfahrzeuge sind bekannt, welche eine mit dem Chassis des Kraftfahrzeugs verbindbare Trageinheit, beispielsweise in Form von Konsolenteilen, und eine an dieser Trageinheit gehaltene und gegenüber dieser Trageinheit verstellbare Stelleinheit umfassen. Die Stelleinheit lagert eine Lenkspindel, welche zum Einleiten einer Lenkbewegung von einem Lenkrad in ein Lenksystem zur Übertragung der Lenkbewegung auf ein lenkbares Rad dient.

Es ist bekannt, eine solche Stelleinheit gegenüber der Trageinheit mittels eines Verstellantriebs verstellbar auszulegen, um die Position eines an der Lenkspindel gehaltenen Lenkrades an die jeweilige Sitzposition eines Fahrers des Kraftfahrzeuges anpassen zu können. Dabei ist es bekannt, eine Verstellbarkeit der Stelleinheit in Achsenrichtung bezüglich der Lenkspindel bereit zu stellen, um eine Längsverstellung der Lenksäule zu erreichen. Weiterhin ist es bekannt, eine Höhenverstellung des Lenkrades durch ein Verschwenken der Stelleinheit gegenüber der Trageinheit zu ermöglichen.

Bekannte Verstellantriebe umfassen Elektromotoren, mittels welchen eine komfortable Verstellung der Stelleinheit gegenüber der Trageinheit erreicht werden kann und welche auch das wiederholte Anfahren vorgespeicherter Positionen ermöglichen, wenn mehrere Fahrer das Kraftfahrzeug bedienen.

Bei elektrisch verstellbaren Lenksäulen für Kraftfahrzeuge ist es notwendig, die Rotation einer Abtriebswelle eines Elektromotors in eine translatorische Verstellbewegung zum Verstellen der Stelleinheit gegenüber der Trageinheit zu erreichen. Dies erfolgt üblicherweise durch einen Gewindestangenantrieb, welcher eine auf dem Abtrieb des Elektromotors angeordnete Schneckenwelle sowie eine Spindelmutter umfasst, die an ihrer Außenseite als Schneckenrad ausgebildet ist, in dessen Verzahnung die auf der Abtriebswelle des Elektromotors angeordnete Schneckenwelle eingreift. Durch Rotation der ortsfesten Spindelmutter wird die Gewindestange axial bewegt. Um einen definierten Verstellbereich der Lenksäule sicher zu stellen, ist ein mechanischer Endanschlag auf der Gewindestange vorgesehen. In analoger Weise kann auch die Gewindestange verdreht werden und dabei eine in Verdrehrichtung arretierte Spindelmutter axial verschoben werden.
Aus der AT 511962 A4 ist eine Lenksäule für ein Kraftfahrzeug bekannt, bei welcher sowohl eine Verschiebung der Lenkspindel als auch eine Verschwenkung der Lenkspindel gegenüber einer Trageinheit vorgenommen werden kann, um eine entsprechende Positionierung des an der Lenkspindel gehaltenen Lenkrades zu erreichen. Beide Verstellbewegungen, also sowohl die Verschiebung als auch die Verschwenkung, werden über jeweils einen Spindelantrieb erreicht. Die Spindelantriebe umfassen jeweils eine Gewindestange, welche über eine Spindelmutter an einer der beiden gegeneinander verstellbaren Einheiten gehalten ist. Die Spindelmutter ist ortsfest gelagert und kann über einen Antriebsmotor mit einer Schneckenwelle, welche auf eine Außenverzahnung der Spindelmutter wirkt, rotiert werden, um über ein Innengewinde, welches mit der Gewindestange eingreift, entsprechend eine Translationsbewegung der Gewindestange bezüglich der Spindelmutter in Richtung der Gewindespindelachse zu erreichen. Durch die Translationsbewegung der Gewindestange wird die Verstellbewegung der Stelleinheit bewirkt.
Aus der DE 43 44 681 A1 ist eine elektrisch verstellbare Lenksäule bekannt, bei welcher ein mechanischer Endanschlag eines Verstellspindelantriebes mit einer Scheibe erfolgt, welche auf einen mechanisch nachbearbeiteten Endbereich der Verstellspindel aufgebracht ist.

Aus der EP 1 980 470 A1 ist eine Lenksäule mit den Merkmalen des Oberbegriffs des Anspruchs 1 bekannt. Dabei wird ein mechanischer Endanschlag durch eine Scheibe realisiert, die auf das Gewinde der Verstellspindel aufgeschraubt und durch eine Sicherungsmutter gesichert ist.

### Darstellung der Erfindung

Ausgehend von dem bekannten Stand der Technik ist es eine Aufgabe der vorliegenden Erfindung, eine Lenksäule für ein Kraftfahrzeug anzugeben, welche einen weiter vereinfachten Aufbau und eine flexible Anwendung ermöglicht.

Diese Aufgabe wird durch eine Lenksäule für ein Kraftfahrzeug mit den Merkmalen des Anspruchs 1 gelöst. Vorteilhafte Weiterbildungen ergeben sich aus den Unteransprüchen.

Entsprechend wird eine Lenksäule für ein Kraftfahrzeug vorgeschlagen, umfassend eine mit dem Chassis des Kraftfahrzeugs verbindbare Trageinheit und ein an dieser gehaltene Stelleinheit, welche eine Lenkspindel drehbar lagert, wobei die Position der Stelleinheit gegenüber der Trageinheit mittels eines Verstellantriebes verstellbar ist und der Verstellantrieb eine Gewindestange mit einem Außengewinde aufweist, welches mit einem Innengewinde einer Spindelmutter des Verstellantriebs in Eingriff steht und wobei die Gewindestange einen Endanschlag zur Begrenzung der Bewegung der Spindelmutter entlang der Gewindestange aufweist. Erfindungsgemäß ist der Endanschlag durch eine auf das Außengewinde der Gewindestange aufgepresste Hülse ausgebildet. Die Verbindung der Hülse und der Gewindestange erfolgt dabei bevorzugt durch einen Längspressverband.

Dadurch, dass der Endanschlag durch eine auf das Außengewinde der Gewindestange aufgepresste Hülse ausgebildet ist, ist eine zusätzliche Bearbeitung der Gewindestange vor dem Montieren des Endanschlages nicht notwendig. Damit kann es sich bei der Gewindestange auch um eine einfach von einer längeren Gewindestange abgelängte Gewindestange handeln, welche nicht weiter bearbeitet wurde. Insbesondere ist eine Bearbeitung des Endbereiches der Gewindestange beispielsweise durch Drehen oder Umformen zum Aufbringen des Endanschlags nicht nötig. Vielmehr kann die den Endanschlag ausbildende Hülse direkt auf das Außengewinde der Gewindestange aufgepresst werden, so dass eine Bearbeitung der Gewindestange nicht notwendig ist.

Der Endanschlag ist weiterhin von der jeweiligen Gewindesteigung des Außengewindes vollkommen unabhängig, so dass der Endanschlag in Form der aufgepressten Hülse universell einsetzbar ist für beliebige Gewindestangen der oben genannten Art.

Der Innendurchmesser der Hülse im nicht aufgepressten Zustand ist bevorzugt kleiner als der Nenndurchmesser des Außengewindes. Auf diese Weise lässt sich ein festes und zuverlässiges Aufpressen der Hülse erreichen und entsprechend ein zuverlässiger Endanschlag erhalten der ein auf Block fahren der Verstellung ermöglicht.

Das Aufpressen der Hülse kann unter einer elastischen Verformung der Hülse erfolgen. Bevorzugt wird die Hülse unter einer plastischen Verformung auf die Gewindestange aufgepresst, da hier die maximale Widerstandskraft gegen eine Längsverschiebung der Hülse auf der Gewindestange erreicht ist.

Durch das Aufpressen der Hülse auf die Gewindestange kann ein sicherer Sitz der Hülse an einer beliebigen Stelle entlang des Außengewindes der Gewindestange erreicht werden. Damit kann der Endanschlag flexibel an die jeweiligen Gegebenheiten der Lenksäule angepasst werden, so dass der Endanschlag modular für eine Vielzahl unterschiedlicher Lenksäulen beziehungsweise eine Vielzahl unterschiedlicher Konfigurationen einer Lenksäule und deren Verstellbereich eingesetzt werden.

Die Hülse ist bevorzugt in Richtung der Achse der Gewindestange aufgepresst. Hierdurch ergibt sich ein besonders festes Aufpressen der Hülse auf dem Außengewinde der Gewindestange. In einer Alternative kann die Hülse auch unter Durchführung einer Rotationsbewegung auf die Gewindestange während eine Aufschraubprozesses aufgepresst werden. Hierdurch lässt sich im Material der Hülse eine dem Außengewinde der Gewindestange ähnliche Struktur einprägen, welche dann zu einer noch höheren Festigkeit des Endanschlages auf der Gewindestange führt. Ein Gewinde wird jedoch nur in die Hülse eingeprägt, wenn auch der Vorschub und die Rotationsgeschwindigkeit beim Aufpressen der Hülse an die jeweilige Steigung des Außengewindes angepasst ist. Dies ist jedoch für die Ausbildung einer festen Verbindung zwischen der Hülse und der Gewindestange nicht notwendig.

Die Hülse ist auf der Gewindestange bevorzugt frei positionierbar, so dass die Hülse je nach Anforderung in dem jeweiligen Kraftfahrzeug beziehungsweise je nach Anforderung der jeweiligen Gewindestange an der geforderten Endanschlagsposition angebracht werden kann. Die als Endanschlag vorgeschlagene aufgepresste Hülse ermöglicht entsprechend ein besonders flexibles Anpassen der aktiven Länge der Gewindestange an die jeweiligen Gegebenheiten für die Lenksäule in dem jeweiligen Kraftfahrzeug.
Besonders bevorzugt ist die Gewindestange für unterschiedliche Lenksäulen lediglich abgelängt und dann die Hülse ohne weitere Nachbearbeitung der Gewindestange aufgepresst. Entsprechend findet keine weitere Bearbeitung und insbesondere kein zerspanende Bearbeitung wie das Abdrehen des Endbereiches der Gewindestange statt, um diese dann einsetzen zu können. Auch auf eine Verstemmung der Hülse als Anschlag auf der Gewindestange kann unterbleiben. Auf diese Weise lässt sich eine kostengünstige und einfache Ausbildung der Verstelleinheit und der Lenksäule erreichen, welche einfach an die unterschiedlichen geometrischen Gegebenheiten in einem Kraftfahrzeug angepasst werden kann, so dass definierte Verstellbereiche eingestellt werden können.

Die Hülse ist bevorzugt aus einem rohrförmigen Halbzeug oder Hohlprofil abgelängt, bevorzugt aus einem weichen metallischen Rohr. Weich bedeutet in diesem Fall, dass die Hülse eine geringere Härte aufweist als die Gewindestange. Da ein solches Halbzeug einfach bereitgestellt werden kann, kann ein flexibler, auf einfache Weise herstellbarer und jeweils passendender Endanschlag für die jeweilige Lenksäule in einem Kraftfahrzeug erhalten werden, ohne dass aufwändige Materialbearbeitungen durchgeführt werden müssen.

Bevorzugt ist die Hülse als weiches Stahlrohr ausgebildet, so dass die plastische Verformung hauptsächlich oder vollständig in der Hülse auftritt, nicht aber an der Gewindestange. Entsprechend lässt sich die Gewindestange auch nachträglich noch über ein Verschieben des Endanschlages an die jeweiligen Gegebenheiten anpassen.

Die Hülse kann aber auch aus einem Kunststoff bestehen, um bei Anfahren der Gewindestange an den durch die Hülse gebildeten Anschlag eine Anschlagsdämpfung zu erreichen und eine Schallemission zu minimieren. Eine Kombination einer metallischen Hülse mit einem Kunststoff ist auch möglich.

Um die Hülse mit dem Außengewinde der Gewindestange noch besser verbinden zu können, weist die Hülse bevorzugt auf deren Innenseite ein oder mehrere Vorsprünge auf, die beispielsweise durch Zähne oder eine Rändelung gebildet sein können. Beim Aufpressen auf die Gewindestange gelangen diese Vorsprünge in Eingriff mit dem Außengewinde und bilden somit eine formschlüssige Verbindung, zusätzlich zur kraftschlüssigen Verbindung. Die Hülse mit den auf der Innenseite angeordneten Vorsprüngen oder Zähnen kann als Strangpressprofil bereitgestellt werden.

### Kurze Beschreibung der Figuren

Bevorzugte weitere Ausführungsformen und Aspekte der vorliegenden Erfindung werden durch die nachfolgende Beschreibung der Figuren näher erläutert. Dabei zeigen:
- Figur 1: eine schematische perspektivische Darstellung einer Lenksäule mit einer elektrischen Verstellung;
- Figur 2: die Lenksäule aus Figur 1 in einer schematischen perspektivischen Seitenansicht;
- Figur 3: die Lenksäule aus Figur 1 in einer weiteren schematischen perspektivischen Seitenansicht;
- Figur 4: ein Verstellantrieb für eine Lenksäule gemäß den vorgenannten Figuren in einer auseinandergezogenen Darstellung in einer ersten Ausführungsform;
- Figur 5: eine schematische perspektivische Darstellung eines Verstellantriebs in einer weiteren Ausführungsform;
- Figur 6: eine schematische perspektivische Darstellung eines Verstellantriebs in noch einer weiteren Ausführungsform;
- Figur 7: eine schematische Querschnittansicht durch eine Hülse; und
- Figur 8: eine schematische Längsschnittansicht durch Hülse und Gewindestange vor der Montage.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen bezeichnet und auf eine wiederholte Beschreibung dieser Elemente wird in der nachfolgenden Beschreibung teilweise verzichtet, um Redundanzen zu vermeiden.

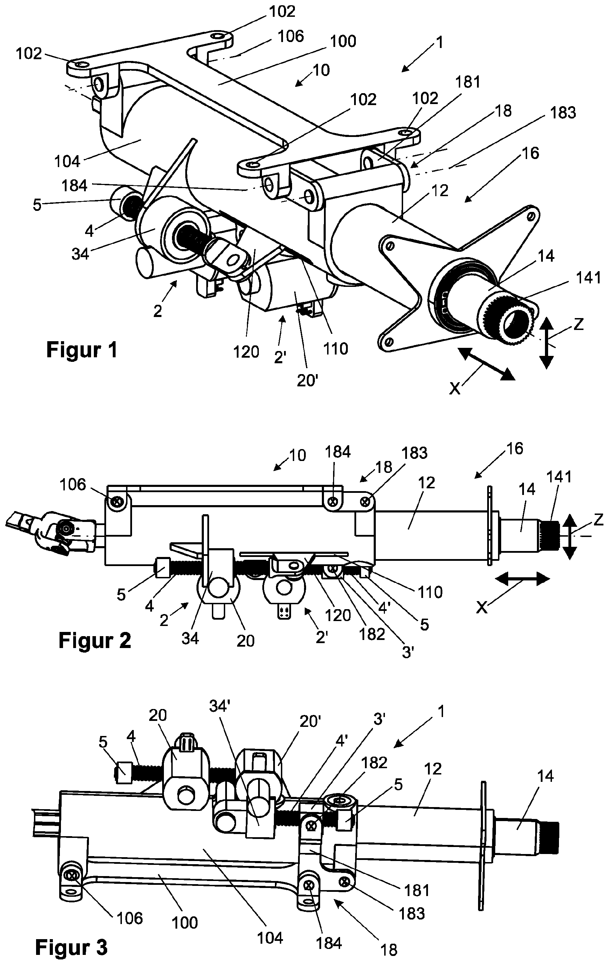

Figur 1 zeigt eine Lenksäule 1, welche eine mit dem Chassis eines hier nicht gezeigten Kraftfahrzeugs verbindbare Trageinheit 10 aufweist, an welcher eine Stelleinheit 16 verstellbar gehalten ist. Die Trageinheit 10 umfasst eine Konsole 100, welche am Chassis des Kraftfahrzeugs, beispielsweise über Befestigungsbohrungen 102, befestigt werden kann.

Die Stelleinheit 16 umfasst ein Mantelrohr 12, in welchem eine Lenkspindel 14 drehbar gelagert ist. Am lenkradseitigen Ende 141 der Lenkspindel 14 kann ein hier nicht gezeigtes Lenkrad befestigt werden. Die Lenkspindel 14 dient dazu, ein von einem Fahrer über das Lenkrad auf die Lenkspindel 14 eingebrachtes Lenkmoment in bekannter Weise auf ein hier nicht gezeigtes lenkbares Rad zu übertragen. Die Lenkspindel 14 kann dabei die Lenkbewegung von dem Lenkrad auf das lenkbare Rad unter Zwischenschaltung eines Lenkgetriebes, gegebenenfalls unter Zuhilfenahme einer Hilfskraftunterstützung, übertragen.

In einer Variante kann die Lenkbewegung von der Lenkspindel 14 auch sensorisch, beispielsweise elektrisch, elektronisch oder magnetisch, abgetastet werden und in eine Steuerung eingespeist werden, welche unter Zuhilfenahme einer Lenkeinrichtung eine Verschwenkung des lenkbaren Rades zur Darstellung der Lenkbewegung ausführt. Derartige Systeme sind als Steer-by-wire bekannt.

Das Mantelrohr 12 ist in einem Tragrohr 104 in einer Längsverstellrichtung X verschiebbar gehalten, wobei sich die Längsverstellrichtung X in Achsenrichtung der Lenkspindel 14 erstreckt. Durch eine Verstellung des Mantelrohrs 12 gegenüber dem Tragrohr 104 kann entsprechend eine Längsverstellung der Lenkspindel 14 und damit des nicht dargestellten Lenkrades zur Anpassung der Position des Lenkrades an die Sitzposition eines Fahrers des Kraftfahrzeugs erreicht werden.

Das Tragrohr 104 ist verschwenkbar an der Konsole 100 befestigt und kann um eine Schwenkachse 106 gegenüber der Konsole 100 verschwenkt werden. Eine Verstellbarkeit der Stelleinheit 16 in einer Höhenverstellrichtung Z, die im Wesentlichen senkrecht zur Längsverstellrichtung X orientiert ist, wird darüber ermöglicht, dass das Mantelrohr 12 über einen Verschwenkmechanismus 18 an der Konsole 100 gehalten ist. Damit ergibt sich eine Verschwenkbarkeit des Mantelrohrs 12 und der Lenkspindel 14 gegenüber der Trageinheit 10 und insbesondere gegenüber der Konsole 100 um die Schwenkachse 106 derart, dass auch eine Höhenverstellung des hier nicht gezeigten und an der Lenkspindel 14 angeordneten Lenkrades erreicht wird, um auch auf diese Weise eine Anpassung der Position des Lenkrades an die Sitzposition des Fahrers zu erreichen.

Im Ausführungsbeispiel ist für jede der beiden Verstellrichtungen ein separater Verstellantrieb 2, 2' mit jeweils einem separatem Verstellgetriebe, umfassend eine Gewindestange 4, 4', sowie eine Spindelmutter 3.

Ein Verstellantrieb 2 ist vorgesehen, mittels welchem eine Verstellung der Stelleinheit 16 gegenüber der Trageinheit 10 in Längsverstellrichtung X erreicht werden kann. Der Verstellantrieb 2 umfasst eine Gewindestange 4, welche über einen Anlenkhebel 120 mit dem Mantelrohr 12 verbunden ist. Der Anlenkhebel 120 ist in einem Schlitz 110 in dem Tragrohr 104 so verschiebbar geführt, dass eine Verschiebung des Anlenkhebels 120 gegenüber dem Tragrohr 104 zu einer Verschiebung der Stelleinheit 16 gegenüber der Trageinheit 10 führt.

Die Gewindestange 4 ist an dem Anlenkhebel 120 gehalten und erstreckt sich in Längsverstellrichtung X. Die Gewindestange 4 ist auch in einer Spindelmutter 3 gehalten, welche ein Innengewinde 32 aufweist, das mit dem Außengewinde der Gewindestange 4 in Eingriff steht. Die Spindelmutter 3 ist drehbar aber ortsfest bezüglich des Tragrohrs 104 in einem Getriebegehäuse 34 gelagert, so dass eine Drehung der Spindelmutter 3 wegen des Gewindeeingriffs mit der Gewindestange 4 zu einer Axialbewegung der Gewindestange relativ zur Spindelmutter 3 führt. Mit anderen Worten findet durch eine Drehung der Spindelmutter 3 eine Relativbewegung zwischen Mantelrohr 12 und Tragrohr 104 so statt, dass eine Verstellung der Position der Stelleinheit 16 gegenüber der Trageinheit 10 durch die Drehung der Spindelmutter 3 bewirkt wird.

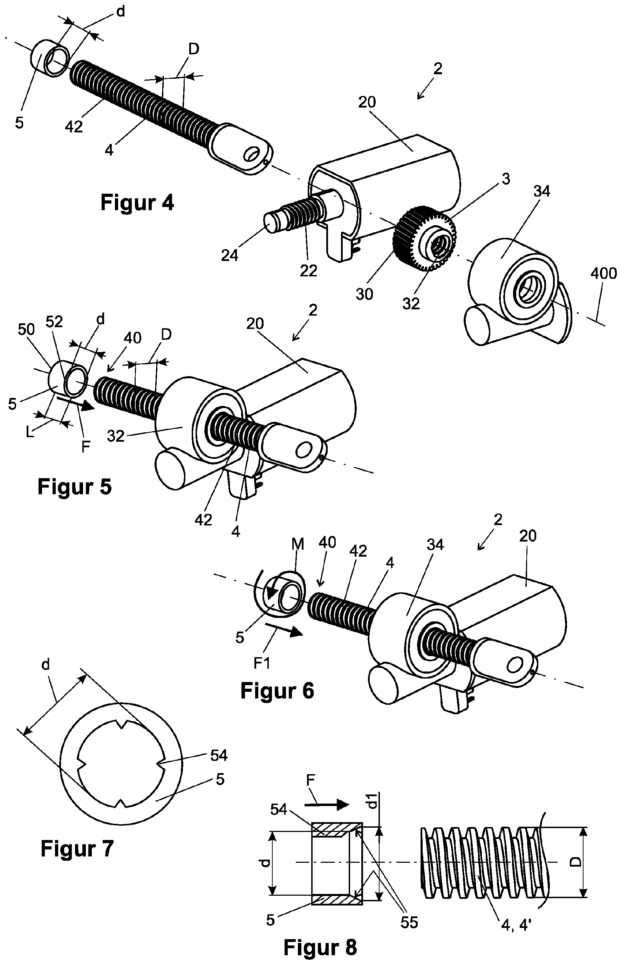

Der Verstellantrieb 2 umfasst weiterhin einen Antriebsmotor 20, auf dessen Abtriebswelle 24 eine in Figur 4 gut zu erkennende Schneckenwelle 22 angeordnet ist. Die Schneckenwelle 22 greift in eine Außenverzahnung 30 der Spindelmutter 3 ein, wobei die Außenverzahnung 30 als Schneckenrad ausgebildet ist. Die Rotationsachse der Schneckenwelle 22 und die Rotationsachse der Spindelmutter 3 stehen senkrecht aufeinander, wie es bei einem Schneckengetriebe an sich bekannt ist.

Entsprechend kann durch eine Rotation der Abtriebswelle 24 des Antriebsmotors 20 die Spindelmutter 3 rotiert werden, wodurch eine Längsverstellung in Längsverstellrichtung X der Stelleinheit 16 gegenüber dem Tragrohr 104 und damit eine Verschiebung der Stelleinheit 16 gegenüber der Trageinheit 10 stattfindet.

Es ist für ein derartiges Verstellsystem auch denkbar und möglich, die Gewindestange zu verdrehen und dadurch dann eine gegenüber dieser nicht drehbar fixierte Spindelmutter zu verschieben. In diesem Fall wäre dann die Spindelmutter mit der Manteleinheit verbunden, um die Verschiebung der Spindelmutter auf die Manteleinheit zu übertragen. Dies ist in den Figuren am Beispiel der Höhenverstellung veranschaulicht.

Ein entsprechender Verstellantrieb 2' ist besonders gut in Figur 3 zu erkennen. Dieser weitere Verstellantrieb 2' weist im Prinzip den gleichen Aufbau, wie der erste Verstellantrieb 2 auf. Der weitere Verstellantrieb 2' treibt eine Verstellbewegung der Stelleinheit 16 in Höhenverstellrichtung Z an. Über die Verdrehung einer Gewindestange 4' wird eine Spindelmutter 3' in Axialrichtung verschoben. Die Spindelmutter 3' ist über ein Gelenk 182 mit einem Stellhebel 181 verbunden. Der Stellhebel 181 ist verschwenkbar in einer Gelenkachse 183 am Tragrohr 104 und in einer Gelenkachse 184 an der Konsole 100. Dadurch wird erreicht, dass über die Gewindestange 4' die Spindelmutter 3' eine entsprechende Verstellung auf den Verschwenkmechanismus 18 und damit auf die Stelleinheit 16 und das Tragrohr 104 aufbringt. Für einen erforderlichen Längenausgleich ist in einem der Gelenke eine entsprechende Ausgleichsfunktion integriert. Im Beispiel ist dies durch eine Langlochaufnahme eines die Schwenkachse 106 bildenden Bolzens in der Konsole dargestellt.

In Figur 4 ist der Verstellantrieb 2 noch einmal in einer schematischen, perspektivischen und auseinandergezogenen Ansicht gezeigt. Der Antriebsmotor 20 mit der Abtriebswelle 24, auf welcher die Schneckenwelle 22 ausgebildet ist, ist zu erkennen. Die Schneckenwelle 22 steht mit der als Schneckenrad ausgebildeten Außenverzahnung 30 der Spindelmutter 3 im Eingriff. Die Spindelmutter 3 ist im Getriebegehäuse 34 ortsfest und um die Achse 400 der Gewindestange 4 drehbar gehalten. Die Spindelmutter 3 ist dabei in Richtung der Achse 400 der Gewindestange 4 relativ zum Tragrohr 104 nicht verschiebbar gelagert. Die Gewindestange 4 steht mit ihrem Außengewinde 42 in Eingriff mit dem Innengewinde 32 der Spindelmutter 3. Das Getriebegehäuse 34 sorgt entsprechend dafür, dass durch eine Drehung der Spindelmutter 3 die mit dieser in Eingriff stehenden Gewindestange 4 in Richtung der Achse 400 der Gewindestange 4 verschoben werden kann.

Um den Verstellweg des Verstellantriebs 2 begrenzen zu können und insbesondere die Bewegung der Gewindestange 4, 4' in Bezug zur Spindelmutter 3 begrenzen zu können, um die jeweilige Lenksäule 1 an die Einbaugegebenheiten in dem jeweiligen Kraftfahrzeugtyp anpassen zu können, wird der Verstellweg durch einen Endanschlag begrenzt. Der Endanschlag ist durch eine auf die Gewindestange 4 aufgepresste Hülse 5 ausgebildet. Die Spindelmutter 3 läuft entsprechend gegen ein vorderes Ende 52 der Hülse 5, so dass auf diese Weise der Verstellweg des Verstellantriebs 2 begrenzt wird.

Die Hülse 5 wird auf die Gewindestange 4 in einem Endabschnitt 40 der Gewindestange 4 aufgepresst. Die Gewindestange 4 ist in dem Endabschnitt 40 nicht anders bearbeitet, als in den übrigen Bereichen der Gewindestange 4. Insbesondere weist sie in dem Endabschnitt 40 ebenfalls ein Außengewinde 42 auf, welches sich bis zum Ende der Gewindestange 4 erstreckt.

Die Gewindestange 4 kann entsprechend durch einfaches Ablängen von einer längeren Gewindestange ausgebildet werden und benötigt damit keine weitere oder spezielle Bearbeitung des Endabschnitts 40, auf welchen die Hülse 5 als Endanschlag aufgepresst werden soll.

Die Hülse 5 weist vor dem Aufpressen einen geringeren Innendurchmesser d auf, als der Nenndurchmesser D der Gewindestange 4. Entsprechend wird die Hülse 5 auf das Außengewinde 42 der Gewindestange 4 im Endbereich 40 durch das in Figur 5 oder 8 durch den Pfeil F schematisch gezeigte axiale Aufpressen aufgepresst. Beim Aufpressen findet eine plastische Verformung der Hülse 5 statt, welche entweder eine elastische Verformung oder besonders bevorzugt eine plastische Verformung ist. Durch ein Ausmessen der Aufpresskraft F kann auch eine Qualitätssicherung der Verbindung dargestellt werden. Auf diese Weise kann die Hülse 5 als Endanschlag auf der Gewindestange 4 aufgebracht werden, ohne dass eine Bearbeitung der Gewindestange 4, insbesondere kein Abdrehen der Gewindestange 4 oder kein aufwändiges Bereitstellen von Formschlussmitteln für den Endanschlag benötigt werden würde. Die Hülse 5 lässt sich vielmehr universell auf jegliche Gewindestange 4, welche einen entsprechenden Nenndurchmesser D aufweist, der zu dem Innendurchmesser d der Hülse 5 kompatibel ist, aufgebracht werden. Die Hülse 5 kann damit als Endanschlag unabhängig auch von der Steigung und der Anzahl der Gewindegänge des Außengewindes 42 auf die Gewindestange 4 aufgebracht werden.

Mit Vorteil weist die Hülse eine Einführschräge oder einen Einführkonus 55 auf, der eine Einführöffnung mit dem Öffnungsdurchmesser d1 ausbildet, wobei der Öffnungsdurchmesser d1 größer ist als der Nenndurchmesser D der Gewindestange 4 beziehungsweise der Gewindestange 4'. Durch den Einführkonus 55 wird das Aufpressen der Hülse 5 erleichtert. Die Vorsprünge 54 ermöglichen zum Kraftschluss auch einen zusätzlichen Formschluss zur Verbindung der Hülse 5 mit der Gewindestange 4 oder der Gewindestange 4'

Wie es offensichtlich ist, und der Figur 8 direkt zu entnehmen ist, kann die Erfindung sowohl auf Verstellantriebe mit verdrehbarer Spindelmutter 3 als auch auf Verstellantriebe mit verdrehbarer Gewindespindel 4' angewendet werden.

Neben dem in Figur 5 gezeigten axialen Aufpressen mit einer Kraft F kann die Hülse 5 auch entlang der schematisch durch den Pfeil M in Figur 6 gezeigten, eine Rotation aufweisenden Aufpressbewegung mit einer Kraft F1 unter Aufbringung eine Drehmoments auf die Gewindestange 4 aufgebracht werden. Auf diese Weise kann bei relativ weichen Materialien der Hülse 5 das Außengewinde 42 der Gewindestange 4 in die innere Oberfläche der Hülse 5 eingeformt werden.

Die Hülse 5 kann eine Länge L aufweisen, welche so gewählt ist, dass das hintere Ende 50 der Hülse 5 im Wesentlichen mit der Stirnfläche des hinteren Endes 40 der Gewindestange 4 abschließt, wobei das vordere Ends 52 der Hülse 5 dann als Endanschlag in der gewünschten Position bereitgestellt ist, um so die Bewegung der Gewindestange 4 in Bezug auf die Spindelmutter 3 zu begrenzen.

In einer weiteren Ausführungsform kann die Hülse 5 jedoch eine konstante Länge L für eine Vielzahl unterschiedlicher Anwendungsmöglichkeiten aufweisen. Die Hülse kann frei entlang der Länge der Gewindestange 4 positioniert werden, um mit ihrem vorderen Ende 52 den gewünschten Endanschlag in einer vorgegebenen Position bereitzustellen.

Die Hülse 5 ist entsprechend eine röhrenförmige Hülse, welche an ihrem hinteren Ende 50 keine geschlossene Stirnfläche aufweist. In einer bevorzugten Ausführungsform, in welcher die Länge L der Hülse 5 entsprechend der jeweiligen Anwendungsform eingestellt wird, kann hier jedoch auch eine Stirnfläche vorhanden sein, so dass die Hülse 50 dann die Form einer Endkappe ausbildet.

In der in Figur 7 schematisch gezeigten Querschnittsansicht der Hülse 5 weist diese wiederum einen Innendurchmesser d auf, welcher je nach Ausführungsform kleiner oder grösser ist, als der Nenndurchmesser D der Gewindestange 4. Weiterhin sind Zähne 54 vorgesehen, welche sich entlang der Hülsenachse auf der Innenseite der Hülse 5 erstrecken. Die Zähne 54 greifen mit dem Außengewinde 42 der Gewindestange 4 ein, wenn die Hülse 5 auf die Gewindestange 4 aufgepresst wird.

In Figur 8 ist schematisch eine Ansicht im Längsschnitt durch die Hülse 5, im Beispiel mit den Verzahnungen 54 und einem Einführkonus 55, vor dem Aufpressen auf die nicht verdrehbar gelagerte Gewindestange 4, entsprechend den Figuren 1 bis 6, oder die verdrehbar gelagerte Gewindestange 4', entsprechend den Figuren 2 und 3, veranschaulicht. Hier wird deutlich, dass dieselbe Hülse für beide Ausführungsformen des Verstellantriebs 2, 2' geeignet ist.

Die Hülse 5 kann entsprechend auf das Außengewinde 42 der Gewindestange 4 aufgepresst werden, wobei der Innendurchmesser d der Hülse 5 in Bezug auf den Gewindenenndurchmesser D der Gewindestange 4 kleiner ist. Die Hülse 5 wird axial auf die Gewindestange 4 aufgepresst.

In einer alternativen Ausführungsform weist die Hülse 5 an ihrer Innenseite Zähne 54 auf, welche sich beim Aufpressen auf das Außengewinde 42 der Gewindestange 4 in die Windungen des Außengewindes 42 einfurchen, wobei der Innendurchmesser d der Hülse 5 in Bezug auf den Gewindenenndurchmesser D der Gewindestange 4 grösser ist und somit lediglich die Zähne 54 der Hülse 5 mit dem Außengewinde 42 der Gewindestange 4 in Kontakt stehen. Hierdurch kann die Verdrehfestigkeit der Hülse 5 weiter verbessert werden, so dass bei einem vermehrten Anschlagen der Spindelmutter an dem durch die Hülse 5 ausgebildeten Endanschlag ein Lockern der Hülse 5 reduziert oder unterbunden werden kann.

Für das Aufpressen der Hülse 5 mit Zähnen 54 auf die Gewindestange 4 kann es vorteilhaft sein, wenn die Härte, zumindest die Randschichthärte, der Hülse 5 höher ist als die Härte der Gewindespindel 4.

Die Hülse 5 ist bevorzugt aus einem Stahlrohr, Hohlprofil oder Strangpressprofil abgelängt, so dass die Hülse 5 kostengünstig und für den jeweiligen Anwendungszweck angepasst ausgebildet werden kann. Bevorzugte Beispiele für das Halbzeug, aus welchem die Hülse 5 abgelängt werden kann, sind folgende Stahlrohre:
EN 10305-1 - 235+N mit Außendurchmesser 12mm und Wanddicke 1,2mm
EN 10305-1 - 235+A mit Außendurchmesser 12mm und Wanddicke 1,2mm
EN 10305-1 - 215+N mit Außendurchmesser 12mm und Wanddicke 1,2mm
EN 10305-1 - 215+A mit Außendurchmesser 12mm und Wanddicke 1,2mm

Die Hülse 5 ist dabei modular einsetzbar und ist insbesondere unabhängig von der Gewindesteigung der jeweiligen Gewindestange 4 beziehungsweise auch von der Anzahl der Gewindegänge des Außengewindes 42.

Soweit anwendbar, können alle einzelnen Merkmale, die in den einzelnen Ausführungsbeispielen dargestellt sind, miteinander kombiniert und/oder ausgetauscht werden, ohne den Bereich der Erfindung zu verlassen.

### Bezugszeichenliste

- 1: Lenksäule
- 10: Trageinheit
- 12: Mantelrohr
- 14: Lenkspindel
- 141: lenkradseitiges Ende
- 16: Stelleinheit
- 18: Verschwenkmechanismus
- 100: Konsole
- 102: Befestigungsbohrung
- 104: Tragrohr
- 106: Schwenkachse
- 110: Schlitz
- 120: Anlenkhebel
- 181: Stellhebel
- 182: Gelenk
- 183: Gelenkachse
- 184: Gelenkachse
- 2: Verstellantrieb
- 2': Verstellantrieb
- 20: Antriebsmotor
- 20': Antriebsmotor
- 22: Schneckenwelle
- 24: Abtriebswelle
- 3: Spindelmutter
- 30: Außenverzahnung
- 32: Innengewinde
- 34: Getriebegehäuse
- 4: Gewindestange
- 4': Gewindestange
- 40: Endabschnitt
- 42: Außengewinde
- 400: Achse der Gewindestange
- 5: Hülse
- 50: hinteres Ende der Hülse
- 52: vorderes Ende der Hülse
- 54: Zahn

- X: Längsverstellrichtung
- Z: Höhenverstellrichtung
- d: Innendurchmesser der Hülse
- d1: Öffnungsdurchmesser der Hülse
- D: Nenndurchmesser der Gewindestange
- F, F1: Aufpresskraft
- L: Länge der Hülse
- M: Aufpressbewegung (Drehmoment)

## Patentansprüche

1. Lenksäule (1) für ein Kraftfahrzeug, umfassend eine mit dem Chassis des Kraftfahrzeugs verbindbare Trageinheit (10) und ein an dieser gehaltene Stelleinheit (16), welche eine Lenkspindel (14) drehbar lagert, wobei die Position der Stelleinheit (16) gegenüber der Trageinheit (10) mittels eines Verstellantriebes (2, 2') verstellbar ist und der Verstellantrieb (2, 2') eine Gewindestange (4, 4') mit einem Außengewinde (42) aufweist, welches mit einem Innengewinde (32) einer Spindelmutter (3) des Verstellantriebs (2, 2') in Eingriff steht und wobei die Gewindestange (4, 4') einen Endanschlag zur Begrenzung der Bewegung der Spindelmutter (3) entlang der Gewindestange (4, 4') aufweist,
**dadurch gekennzeichnet, dass**
der Endanschlag durch eine auf das Außengewinde (42) der Gewindestange (4, 4') aufgepresste Hülse (5) ausgebildet ist.

2. Lenksäule (1) gemäß Anspruch 1, **dadurch gekennzeichnet, dass** der Innendurchmesser (d) der Hülse (5) im nicht aufgepressten Zustand kleiner als der Nenndurchmesser (D) der Gewindestange (4, 4') ist.

3. Lenksäule (1) gemäß Anspruch 1 oder 2, **dadurch gekennzeichnet, dass** die Hülse (5) unter plastischer Verformung auf der Gewindestange (4, 4') aufgepresst ist.

4. Lenksäule (1) gemäß Anspruch 1 oder 2, **dadurch gekennzeichnet, dass** die Hülse (5) durch elastische Verformung auf der Gewindestange (4, 4') aufgepresst ist.

5. Lenksäule (1) gemäß einem der vorstehenden Ansprüche, **dadurch gekennzeichnet, dass** die Hülse (5) in Richtung der Achse der Gewindestange (4, 4') auf das Außengewinde (42) aufgepresst ist.

6. Lenksäule (1) gemäß einem der vorstehenden Ansprüche 1 bis 4, **dadurch gekennzeichnet, dass** die Hülse (5) mit einer Rotationsbewegung auf die Gewindestange (4, 4') aufgepresst ist.

7. Lenksäule (1) gemäß einem der vorstehenden Ansprüche, **dadurch gekennzeichnet, dass** die Hülse (5) auf der Gewindestange (4, 4') frei positionierbar ist.

8. Lenksäule (1) gemäß einem der vorstehenden Ansprüche, **dadurch gekennzeichnet, dass** die die Hülse (5) aus einem rohrförmigen Halbzeug abgelängt ist.

9. Lenksäule (1) gemäß einem der vorstehenden Ansprüche, **dadurch gekennzeichnet, dass** die Hülse (5) aus einem metallischen Rohr oder einem Kunststoff ausgebildet ist.

10. Lenksäule (1) gemäß einem der vorstehenden Ansprüche, **dadurch gekennzeichnet, dass** die Hülse (5) auf ihrer Innenseite mindestens einen Zahn (54) aufweist, welcher nach dem Aufpressen der Hülse (5) im Eingriff mit dem Außengewinde (42) der Gewindestange (4, 4') steht.

## Claims

1. Steering column (1) for a motor vehicle, comprising a supporting unit (10) which is connectable to the chassis of the motor vehicle, and an adjusting unit (16) which is held on said supporting unit and rotatably supports a steering spindle (14), wherein the position of the adjusting unit (16) in relation to the supporting unit (10) is adjustable by means of an adjustment drive (2, 2'), and the adjustment drive (2, 2') comprises a threaded rod (4, 4') having an external thread (42) which is engagement with an internal thread (32) of a spindle nut (3) of the adjustment drive (2, 2'), and wherein the threaded rod (4, 4') comprises an end stop for limiting the movement of the spindle nut (3) along the threaded rod (4, 4'),
**characterized in that**
the end stop is formed by a sleeve (5) pressed onto the external thread (42) of the threaded rod (4, 4').

2. Steering column (1) according to Claim 1,
**characterized in that** the inside diameter (d) of the sleeve (5) when not pressed on is smaller than the nominal diameter (D) of the threaded rod (4, 4').

3. Steering column (1) according to Claim 1 or 2,
**characterized in that** the sleeve (5) is pressed on the threaded rod (4, 4') under plastic deformation.

4. Steering column (1) according to Claim 1 or 2,
**characterized in that** the sleeve (5) is pressed on the threaded rod (4, 4') by elastic deformation.

5. Steering column (1) according to one of the preceding claims, **characterized in that** the sleeve (5) is pressed onto the external thread (42) in the direction of the axis of the threaded rod (4, 4').

6. Steering column (1) according to one of the preceding Claims 1 to 4, **characterized in that** the sleeve (5) is pressed onto the threaded rod (4, 4') with a rotation movement.

7. Steering column (1) according to one of the preceding Claims, **characterized in that** the sleeve (5) is positionable freely on the threaded rod (4, 4').

8. Steering column (1) according to one of the preceding claims, **characterized in that** the sleeve (5) is cut to size from a tubular semi-finished product.

9. Steering column (1) according to one of the preceding claims, **characterized in that** the sleeve (5) is formed from a metallic tube or from a plastic.

10. Steering column (1) according to one of the preceding claims, **characterized in that** the sleeve (5) comprises, on its inner side, at least one tooth (54) which, after the sleeve (5) is pressed on, is in engagement with the external thread (42) of the threaded rod (4, 4').

## Revendications

1. Colonne de direction (1) pour un véhicule automobile, comprenant une unité de support (10) pouvant être assemblée au châssis du véhicule automobile et une unité de réglage (16) maintenue sur celle-ci, qui soutient de façon rotative une broche de direction (14), dans laquelle la position de l'unité de réglage (16) par rapport à l'unité de support (10) est déplaçable au moyen d'un entraînement de déplacement (2, 2') et l'entraînement de déplacement (2, 2') présente une tige filetée (4, 4') avec un filet extérieur (42), qui est en prise avec un filet intérieur (32) d'un écrou de broche (3) de l'entraînement de déplacement (2, 2') et dans lequel la tige filetée (4, 4') présente une butée d'extrémité pour limiter le mouvement de l'écrou de broche (3) le long de la tige filetée (4, 4'), **caractérisée en ce que** la butée d'extrémité est formée par une douille (5) pressée sur le filet extérieur (42) de la tige filetée (4, 4').

2. Colonne de direction (1) selon la revendication 1, **caractérisée en ce que** le diamètre intérieur (d) de la douille (5) dans l'état non pressé est plus petit que le diamètre nominal (D) de la tige filetée (4, 4').

3. Colonne de direction (1) selon la revendication 1 ou 2, **caractérisée en ce que** la douille (5) est pressée sur la tige filetée (4, 4') par déformation plastique.

4. Colonne de direction (1) selon la revendication 1 ou 2, **caractérisée en ce que** la douille (5) est pressée sur la tige filetée (4, 4') par déformation élastique.

5. Colonne de direction (1) selon l'une quelconque des revendications précédentes, **caractérisée en ce que** la douille (5) est pressée sur le filet extérieur (42) dans la direction de l'axe de la tige filetée (4, 4').

6. Colonne de direction (1) selon l'une quelconque des revendications 1 à 4, **caractérisée en ce que** la douille (5) est pressée sur la tige filetée (4, 4') avec un mouvement de rotation.

7. Colonne de direction (1) selon l'une quelconque des revendications précédentes, **caractérisée en ce que** la douille (5) peut être positionnée librement sur la tige filetée (4, 4').

8. Colonne de direction (1) selon l'une quelconque des revendications précédentes, **caractérisée en ce que** la douille (5) est coupée à longueur à partir d'un demi-produit tubulaire.

9. Colonne de direction (1) selon l'une quelconque des revendications précédentes, **caractérisée en ce que** la douille (5) est réalisée en un tube métallique ou en une matière plastique.

10. Colonne de direction (1) selon l'une quelconque des revendications précédentes, **caractérisée en ce que** la douille (5) présente sur son côté intérieur au moins une dent (54), qui est en prise avec le filet extérieur (42) de la tige filetée (4, 4') après le pressage de la douille (5) .
